(19) Europäisches Patentamt
European Patent Office
Office européen des brevets

(11) **EP 1 826 934 B1**

(12) **EUROPÄISCHE PATENTSCHRIFT**

(45) Veröffentlichungstag und Bekanntmachung des Hinweises auf die Patenterteilung:
**19.03.2014 Patentblatt 2014/12**

(51) Int Cl.:
*H04J 3/12* (2006.01)    *H04M 3/00* (2006.01)
*H04M 11/06* (2006.01)    *H04Q 11/04* (2006.01)

(21) Anmeldenummer: **06025417.4**

(22) Anmeldetag: **08.12.2006**

(54) **Verfahren zur SHDSL-Übertragung unter Erfüllung von Qualitätskriterien**

Method for SHDSL transmission compliant with quality criteria

Procédé destiné à la transmission SHDSL à condition de remplir des critères de qualité

(84) Benannte Vertragsstaaten:
**AT BE BG CH CY CZ DE DK EE ES FI FR GB GR HU IE IS IT LI LT LU LV MC NL PL PT RO SE SI SK TR**

(43) Veröffentlichungstag der Anmeldung:
**29.08.2007 Patentblatt 2007/35**

(73) Patentinhaber: **Albis Technologies AG
8047 Zürich (CH)**

(72) Erfinder: **Keller, Christoph
4127 Birsfelden (CH)**

(74) Vertreter: **Müller - Hoffmann & Partner
Patentanwälte
St.-Martin-Strasse 58
81541 München (DE)**

(56) Entgegenhaltungen:
**US-B1- 6 965 608**

• **ETSI TECHNICAL COMMITTEE TRANSMISSION AND MULTIPLEXING (TM): "Transmission and Multiplexing (TM); Access transmission system on metallic access cables; Symmetric single pair high bitrate Digital Subscriber Line (SDSL); ETSI TS 101 524 V1.3.1" JOURNAL ARTICLE, [Online] Februar 2005 (2005-02), Seiten 1-217, XP002430157 ETSI STANDARDS, EUROPEAN TELECOMMUNICATIONS STANDARDS INSTITUTE, SOPHIA-ANTIPO, FR Gefunden im Internet: URL:http://webapp.etsi.org/ exchangefolders /ts_101524v01> [gefunden am 2007-04-18]**

**Beschreibung**

Die vorliegende Erfindung betrifft ein Verfahren zur SHDSL-Übertragung mit mehreren SHDSL-Leitungen unter Erfüllung von Qualitätskriterien gemäss dem Oberbegriff des Patentanspruches 1 und einen SHDSL-Multiplexer zur Durchführung des Verfahrens gemäss dem Patentanspruch 10.

Im Folgenden werden anstelle einer deutschen Nichtfachsprache die englischsprachige Nomenklatur und Akronyme aus der Standardisierung der Organisationen ITU-T und ETSI benutzt, wie z.B.

| | |
|---|---|
| «Path Interchange» | Vertauschung zweier Aderpaare; |
| «DLL» | Digital Local Line; |
| «Payload» | Nutzlast, Nutzinformation; |
| usw. | |

Durch die Verwendung standardisierter Begriffe und Akronyme lassen sich Unklarheiten vermeiden. Eine Liste der verwendeten Akronyme, Abkürzungen und Begriffe am Schluss dieses Dokumentes bildet einen integralen Bestandteil dieser Schrift.

SHDSL-Normen definieren einen n-Wire oder einen M-Pair Mode, wobei für n und M gilt:

$$n = 2 * M .$$

Dieser standardisierte n-Wire Mode hat einige Einschränkungen. Namentlich fehlen die Eigenschaften Resilience, Path Interchange und Protection-Features. Diese Eigenschaften - synonym Qualitätskriterien genannt - sind nachstehend definiert.

Resilience

Ausfallsicherheit, wobei bei einem Ausfall die betreffende Übertragungsstrecke mit reduzierter Bandbreite weiterläuft, in der Fachsprache wird dies «gracefull degration» genannt.

Path Interchange

Pfadvertauschung, Vertauschung zweier oder mehrerer Aderpaare bei der Installation, z.B. durch den Betreiber der Strecke. Anstelle von «Path Interchange» wird dieses Qualitätsmerkmal zuweilen präziser «Path Interchange Compensation» genannt.

Differential Delay Compensation

Gemäss ITU-T G.991.2 [1] p. 28 ist im optionalen M-Pair Mode mit M >= 2 ein Differential delay buffer definiert, um pro Aderpaar aufgetretene Verzögerungen zu kompensieren. Diese Verzögerungen sind bedingt durch Aderpaar-individuelle Charakteristika wie Länge, Drahtdurchmesser, Isolation, usw.

Protection-Features

Protection bedeuet: Umschalten auf im voraus zugewiesene Kapazität zwischen zwei Knoten, um eine ausgefallene oder gestörte Übertragung zu schützen.

i) Protection Mode (1+1)

Es ist nur ein Framer/Mapper in Betrieb. Hier ist der Nutzleitung die zweite SHDSL-Line als Ersatzleitung zugeordnet. Das Signal liegt an beiden Leitungen an. Wenn eine der Leitungen ausfällt oder Probleme macht, schalten die empfangsseitigen Netzelemente auf die Ersatzleitung. Der Vorteil des 1+1 Protection Mode ist, dass die Umschaltzeit sehr schnell ist und dass die Konfiguration einfach ist.

ii) Protection Mode (1:1)

Ausgefallene Leitungen werden direkt (1:1) durch Ersatzleitungen ersetzt. Es werden beide SHDSL-Leitungen hochgefahren. Der Ersatzpfad ist erst dann freigeschaltet, wenn sowohl sende- als auch empfangsseitig umgeschaltet wurde. Solange der Netzbetrieb störungsfrei abläuft, kann der Ersatzkanal auch für die Übertragung von Daten geringer Priorität genutzt werden. Dieser Mode kann auch bei vierfach SHDSL-Systemen zwei zum 1:3-Protection Mode ausgebaut werden.

Aus dem Stand der Technik ist US 6,965,608 B1 [3] bekannt. In dieser Schrift wird ein Übertragungsverfahren für zwischen zwei SDSL-Modems offenbart, bei dem in jedem Rahmen der payload ein Bit vorgesehen ist, um zu unterscheiden, ob ein T1- oder ein E1-Übertragungsprotokoll in der betreffenden payload angewendet wird. Vorzugsweise ist dafür das F/Z-Bit vorgesehen. E1 steht für ein digitale Übertragung von 2.048 Mbps (Europa) während T1 für eine digitale Übertragung von 1.544 Mbps (US) steht.

Vorstehend wurde stets auf ITU-T G.991.2 [1] bezug genommen. Es gibt dazu ein europäisches Pendant ETSI TS 101 524 V1.3.1 (2005-02) [2]. Auf Seite 11 ist im Vorwort dazu ausgeführt, dass ITU-T G.991.2 [1] auf ETSI TS 101 524 [2] basiert und dass zukünftige Ausgaben von ETSI TS 101 524 [2] dann auf ITU-T G.991.2 [1] verweisen, wenn die betreffenden Abschnitte identisch sind.

Der vorliegenden Erfindung liegt nun ausgehend von den Festlegungen gemäss ITU-T G.991.2 [1] die Aufgabe zugrunde, ein Verfahren zur SHDSL-Übertragung mit mehreren SHDSL-Leitungen unter Erfüllung von Qualitätskriterien anzugeben, das die vorgenannten Nachteile behebt und insbesondere die Qualitätskriterien Resilience, Path Interchange, und Protection-Feature's ermöglicht.

Diese Aufgabe wird für ein Verfahren der eingangs genannten Art durch die im Patentanspruch 1 angegebenen Merkmale gelöst.

Durch die erfindungsgemässe Lösung, wonach «für die Anwendungsschnittstelle in jeder SHDSL Transceiver Unit ein zusätzliches Bit der Nutzdaten vorgesehen ist, wobei aus der Einfügung des zusätzlichen Bit im festen Zeitraster ein Subframe gebildet wird, der die Qualitätskriterien und Signalisierung enthält», ist ein Verfahren geschaffen, dass unabhängig von der Übertragung auf den Leitungen ist, da die Nutzdaten (payload) einfach in Richtung leere Bits verschoben werden. Vorteilhafterweise wird ein Synchronisationswort mit einem festen Muster dazu benutzt, um den Anfang der Rahmenstruktur zu erkennen.

Dieses zusätzliche Bit kann vorteilhafterweise - wegen einer einfacheren Implementierung - am Anfang der Nutzdaten eingefügt werden, die vorgeschlagene Lösung ist jedoch unabhängig von der Lage dieses Bits.

Vorteilhafte Ausgestaltungen der Erfindung sind in weiteren Ansprüchen angegeben.

Ein Ausführungsbeispiel mit verschiedenen Ausprägungen der Erfindung wird nachfolgend anhand der Zeichnung näher erläutert. Dabei zeigen:

Figur 1     Ausführungsbeispiel einer SHDSL-Übertragungsstrecke gemäss der vorliegenden Erfindung;
Figur 2     Rahmenstruktur für das Verfahren gemäss der vorliegenden Erfindung;
Figur 3     Zustandsdiagramm für die Synchronisierung.
Figur 4     Blockschaltbild einer möglichen AIMSS-Realisierung.

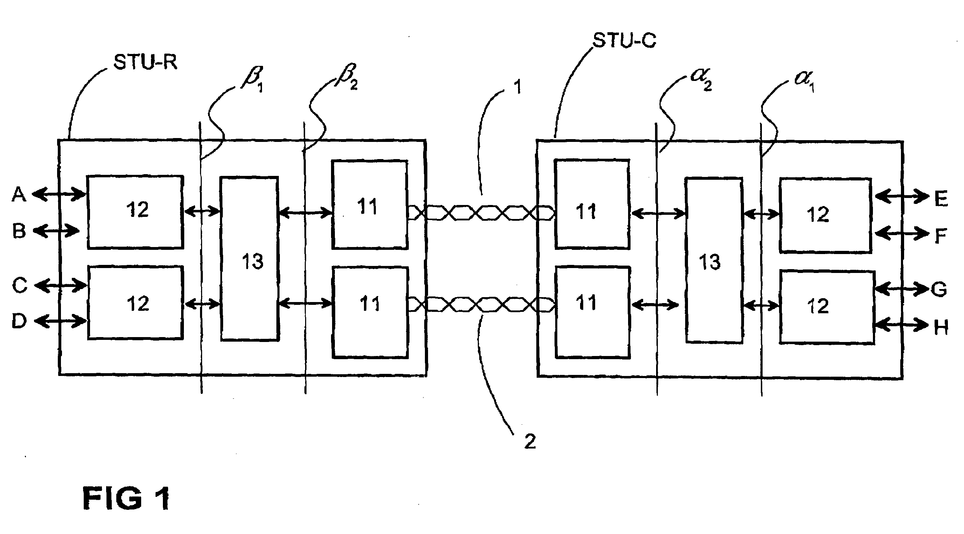

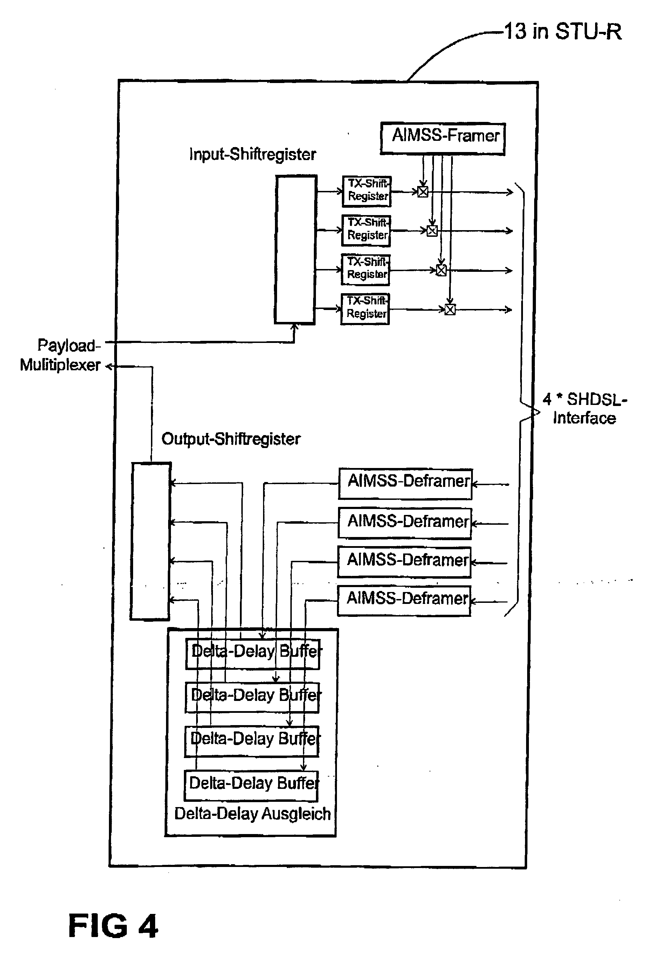

In Figur 1 sind die funktionalen Komponeten für eine SHDSL-Übertragungsstrecke gemäss einer bevorzugten Ausführungsform der vorliegenden Erfindung gezeigt. Diese Bezeichnung, insbesondere die interne Schnittstelle $\alpha$ ist dem Dokument ITU-T G.991.2 [1], Figur 4-1/G.991.2 entnommen. Die in Figur 1 angegebenen Anwenderschnittstellen A, B, C und D sowie die Amtsschnittstellen E, F, G und H sind rein beispielhaft. An dieser Stelle wird noch auf den begrifflichen Unterschied zwischen Anwenderschnittstelle A, B, C und D und der (internen) Anwendungsschnittstellen $\alpha$, $\beta$ iSv von hingewiesen ITU-T G.991.2 [1].

An der Anwendungsschnittstelle $\alpha_2$, $\beta_2$ ist ein zusätzliches Bit vorgesehen. Dieses Bit wird im Rahmen dieser Schrift AIMSS-Bit genannt. Gemäss der Rahmenstruktur bzw. der Timeslots TS ist dies also ein Bit, dass alle 125 $\mu$s übertragen wird. Für dieses Bit muss die SHDSL-Payload Bitrate um 8 kBit/s erhöht werden. Dies wird erreicht in dem man ein zusätzliches Z-Bit überträgt. Bei einer SHDSL-Payloadbitrate von 89 Zeitschlitzen (5696 kBit/s) ist dies nicht mehr möglich da dies nach Standard die maximale SHDSL-Payloadbitrate ist. In diesem Fall wird das AIMSS-Bit dem Payload gestohlen. Die maximale Payloadbitrate eines solchen zwei Aderpaar-Systems beträgt 11376 kBit/s. Wenn das AIMSS-Bit dem Payload gestohlen wird ist die Payload-Datenrate nicht mehr durch 64 kBit/s teilbar. Diese «Robbed-Bit»-Technik ist deshalb nur bei Packet-Interfaces, z.B. Ethernet, auf der Teilnehmerseite erlaubt. Die Wahl zwischen Z-Bit und Robbed-Bit bei einer SHDSL-Bitrate kleiner 5696 kBit/s ist der jeweiligen System-Implementierung überlassen.

Aus diesem Bit wird ein Signal - im folgenden AIMSS-Frame genannt - mit einer Periodizität von 48 Bit gebildet. Diese Bits sind von 0 bis 47 nummeriert. Der so gebildete AIMSS-Frame hat dadurch eine Periodizität von 6 ms. Von diesen 48 Bits werden 10 Bits mit einem fixen Muster belegt. Dieses Muster wird zur Synchronisation benutzt. Das Muster ist so aufgebaut, dass es keine Falschsynchronisation geben kann solange keine Übertragungsfehler auftreten.

Dieser AIMSS-Frame wird auch für den Delta-Delay Ausgleich benützt. Das maximale Delta-Delay, das sich ausgleichen lässt ist 3ms.

In den 38 Bits - also 48 Bit minus die 10 Snychronisationsbits, nämlich 1 bis 6, 11, 16, 21 und 26 - welche nicht für die Synchronisierung benützt werden, wird die Nutzinformation für den AIMSS-Frame übertragen.

Im Mehraderpaar-Betrieb wird die Payload Byte-interleafed übertragen. Die Bitrate des Signals vom AIMSS zum SHDSL-Tranceiver ist dabei die Hälfte wie die Bitrate vom Framer/Mapper zum AIMSS-Block 13.

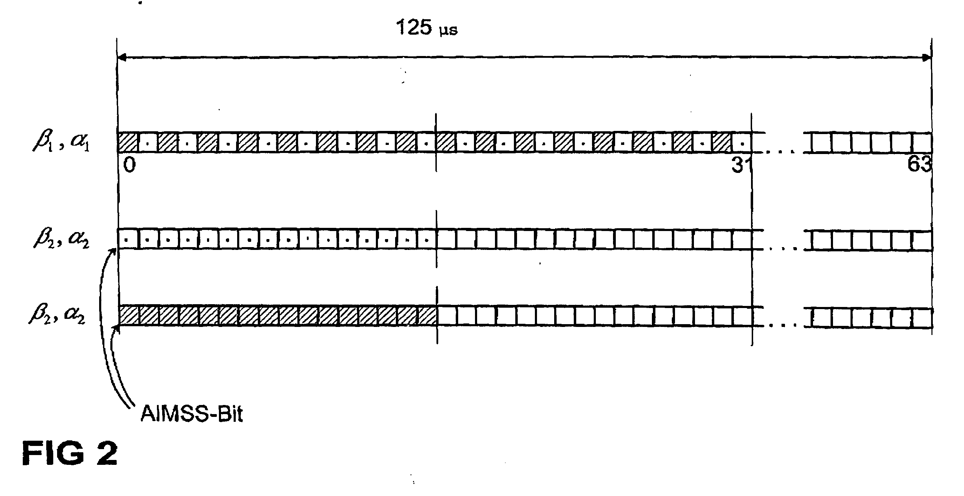

Figur 2 zeigt die Payload Aufteilung anhand eines Beispiels mit einem Payload von 2048 kBit/s. Mit SHDSL1 und SHDSL2 sind die Signale/Bitfolgen auf der betreffenden Übertragungsleitung 1 und 2 - vgl. Figur 1 - dargestellt. Das über die Anwendungsschnittstelle zu bildende «Summensignal» ist in Figur 2 mit $\beta_1,\alpha_1$ bezeichnet. Die in Figur 2 unten mit $\beta_2,\alpha_2$ Bezeichneten Signale sind die beiden Teile im 2-Aderbetrieb an den betreffenden Schnittstellen. Im vorliegenden Fall mit zwei Leitungen weist dieses Summensignal die doppelte Bandbreite auf. Dieses Summensignal ist in der Figur 2 bezüglich der Zeitachse nicht korrekt dargestellt.

Damit der AIMSS-Frame besser gezeigt werden kann wird dieser in der nachfolgenden Tabelle in zwei Hälften mit je 24 Bits dargestellt. Diese beiden Hälften repräsentieren einen AIMSS-Subframe. Der CRC4 wird getrennt über die vorgenannten Hälften des AIMSS-Subframes gerechnet.

Tab. 1 Belegung eines AIMSS-Frames von 48 Bit Länge.

| 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 |
|---|---|---|---|---|---|---|---|---|----|----|----|----|----|----|----|----|----|----|----|----|----|----|----|
| 0 | 0 | 0 | 0 | 0 | 1 | $c_1$ | $c_2$ | $c_3$ | $c_4$ | 1 | $p_1$ | $p_2$ | $p_3$ | $p_4$ | 1 | $a_1$ | $a_2$ | $a_3$ | $a_4$ | 1 | $q_1$ | $q_2$ | $q_3$ |

| 25 | 26 | 27 | 28 | 29 | 30 | 31 | 32 | 33 | 34 | 35 | 36 | 37 | 38 | 39 | 40 | 41 | 42 | 43 | 44 | 45 | 46 | 47 | 48 |
|----|----|----|----|----|----|----|----|----|----|----|----|----|----|----|----|----|----|----|----|----|----|----|----|
| $q_4$ | 1 | $t_1$ | $t_2$ | $t_3$ | $t_4$ | $c_1$ | $c_2$ | $c_3$ | $c_4$ | $v_1$ | $v_2$ | $v_3$ | $v_4$ | $w_1$ | $w_2$ | zb | $s_1$ | $s_2$ | $s_3$ | $s_4$ | $s_5$ | $s_6$ | $s_7$ |

Die in der vorstehenden Tabelle 1 aufgeführten Bezeichner haben folgende Bedeutung:

$c_1 - c_4 =$      CRC4 Info
$p_1 - p_4 =$      Path Identifier
$a_1 - a_4 =$      Alarm-Information
$q_1 - q_4 =$      QoS-Information, d.h. Protection und Resilience
$t_1 - t_4 =$      TX-Information
$v_1 - v_2 =$      Alarm Information am User-Interface
$w_1 - w_2 =$      Wire-Information
$zb =$      AIMSS-Frame in Z-Bit
$s_1 - s_7 =$      Path Speed Information, Wertebereich 3 bis 89

Diese Informationen sind im AIMSS-Block 13 konfigurierbar. Wichtige Informationsbits aus dem ATMSS-Frame werden zu Key-Informationen Key-Inf zusammengefasst. Key-Information Key-Inf sind z.B.

- Path-Identifier $p_1 - p_4$,
- Wire-Information $w_1 - w_2$,
- z-Bit zb und
- Path Speed $s_1 - s_7$.

Synchronisierung:

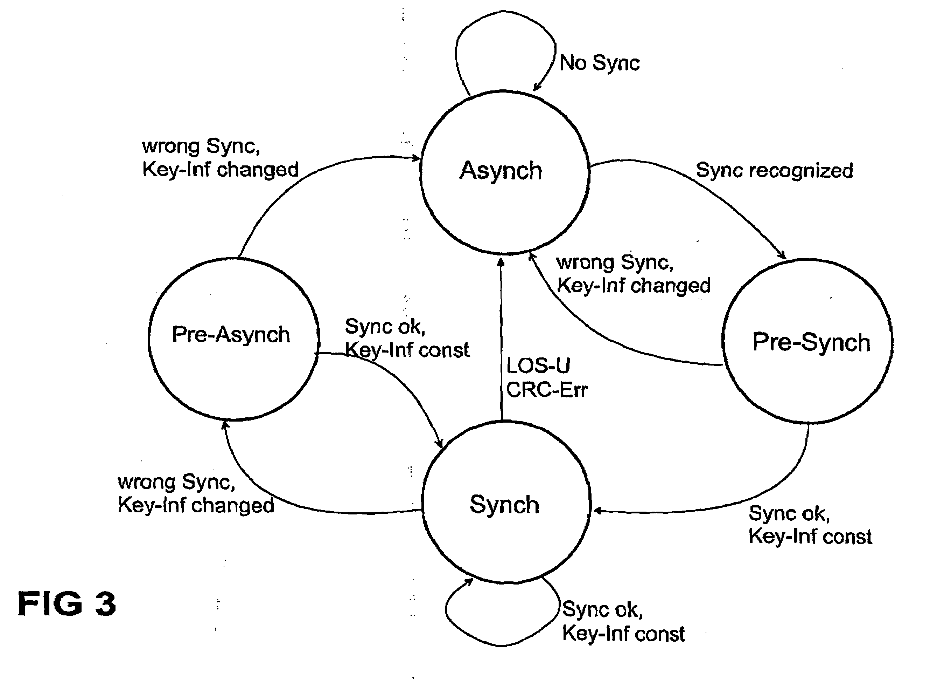

Wird zweimal hintereinander die Rahmeninformation korrekt erkannt und sind Key-Informationen konstant, gilt die Synchronisierung als erfolgreich. Diese Rahmeninformation beinhaltet also ein festes Muster, das durch die Bits 1 bis 6, 11, 16, 21 und 26 definiert ist, siehe dazu die Tabelle 1. Zusätzlich zur Rahmeninformation werden noch die Key-Informationen Key-Inf überprüft. Die Key-Information Key-Inf darf nicht ändern und der Wert muss gültig sein. Das Zustandsdiagramm zur Synchronisierung ist der Figur 3 zu entnehmen. Wird zweimal ein nicht korrekter AIMSS-Frame festgestellt, gilt die Synchronisation als verloren.

CRC-Bits

In den Bits 7 bis 10 und 31 bis 34 gemäss der Tabelle 1 wird je eine Checksumme übertragen. Diese Checksumme wird nach dem CRC-4 Algorithmus mit dem Polynom

$$x^4 + x + 1$$

berechnet. Die Checksumme wird je über die zwei Hälften des AIMSS-Subframes berechnet, das heisst in einem AIMSS-Frame hat es zwei CRC-4 Blöcke. Auf Basis dieser Checksumme kann die Qualität des AIMSS-Signals überprüft werden. Dadurch kann über eine längere Periode, z.B. 1s, auf eine Bit-Error-Rate geschlossen werden.

Path Identifier

In den Bits 12 bis 15 wird der Path Identifier übertragen. Durch den Path Identifier kann der Pfad eineindeutig identifiziert werden. Dadurch kann eine Pfad Vertauschung aufgelöst werden. Die Codierung kann wie folgt vorgesehen sein:

p4...p1 = «0001» entspricht Pfad 1 (Tx U1)
p4...p1 = «0010» entspricht Pfad 2 (Tx U2)
p4...p1 = «0100» entspricht Pfad 3 (Tx U3)
p4...p1 = «1000» entspricht Pfad 4 (Tx U4)

Bedingt durch die englische Sprache ist in diesem Kontext mit «path» oder Pfad eine SHDSL-Leitung 1, 2 usw. zu verstehen.

Alarm Information

In den Bits 17 bis 20 wird die Alarm Information des AIMSS Signals übertragen. Eine «1» bedeutet, für diesen Pfad ist ein Alarm aufgetreten; die Codierung ist wie folgt:

  $a1$ = Alarm auf Pfad 1 (Tx U1)
  $a2$ = Alarm auf Pfad 2 (Tx U2)
  $a3$ = Alarm auf Pfad 3 (Tx U3)
  $a4$ = Alarm auf Pfad 4 (Tx U4)

Die RX-Alarm Information aller empfangenen Alarme wird ODERverknüpft.

QoS Information

Für die Sicherstellung von verschiedenen Diensten kann man im AIMSS Protection oder Resilience aktivieren:

  $q2...q1$ = «00» entspricht keine Protection $\rightarrow$ «n Wire-Mode»
  $q2...q1$ = «01» entspricht Resilience Mode
  $q2...q1$ = «10» entspricht 1+1 Protection
  $q2...q1$ = «11» entspricht 1:1 oder 1:n Protection

Protection 2 Wire Mode

$q4...q3$ = Nummer (0-3) des Datenstrom bei 1:1 oder 1:n Protection

Protection 4 Wire Mode

$q3$ = Nummer (0 oder 1) des Datenstrom bei 1:1

Protection

$q4$ = Nummer (0 oder 1) des Teilstroms; zur Erläuterung:
Stehen 4 Lines zur Verfügung kann im 4-Wire Protection gefahren werden. Beim 4-Wire Betrieb wird der Datenstrom vom User-Interface 12 in zwei Teilströme aufgespalten.
Die Einzelheiten eines Systems mit 1:1 oder 1:n Protection müssen über die Konfiguration eingestellt werden.

TX-Information

Die TX-Information zeigt an, welche Systeme für TX benützt werden. Diese Information ist vor allem im Zusammenhang dem Resilience-Mode oder einem Protection-Mode notwendig. Werden im Resilience-Mode nicht alle Lines die auf dem fernen Gerät mit Payload belegt, ist das ganze System fehlerhaft. Sind STU-C und STU-R nicht einig, welche SHDSL-Line für den Payload benutzt wird, funktioniert dies ohne die TX-Information nicht. Die TX-Information dient zur Identifikation der SHDSL-Strecke, die tatsächlich Payloads beinhaltet. Beim n-Wire Mode ohne Resilience ist das nicht notwendig, denn dort hat ein Fehler einen Totalausfall zur Folge.

  $t1$ =    U1 wird für Payload benützt.
  $t2$ =    U2 wird für Payload benützt.
  $t3$ =    U3 wird für Payload benützt.
  $t4$ =    U4 wird für Payload benützt.

Alarm Information am User-Interface

Der englische Ausdruck User-Interface heisst Anwender/Vermittlungsschnittstelle. In dieser Information wird mitgeteilt, welche Anwender-/Vermittlungsschnittstellen fehlerhaft sind. Im folgenden ist diese Anwender-/Vermittlungsschnittstelle mit T/V bezeichnet (Teilnehmer/Vermittlung). Diese Information wird bei allem bei 1:1 und 1:n Protection benötigt.

  $v1$ =    Alarm auf der T/V-Schnittstelle zu Pfad 1/Datenstrom 1

v2 =    Alarm auf der T/V-Schnittstelle zu Pfad 2/Datenstrom 2
v3 =    Alarm auf der T/V-Schnittstelle zu Pfad 3/Datenstrom 3
v4 =    Alarm auf der T/V-Schnittstelle zu Pfad 4/Datenstrom 4

Wire-Information

Zeigt wie viele Aderpaare ein komplettes Inverse Multiplexer Signal ergeben.

w2...w1 =    "00" 2-Wire Operation (1 Aderpaar)
w2...w1 =    "01" 4-Wire Operation (2 Aderpaare)
w2...w1=    "10" 8-Wire Operation (4 Aderpaare)

Protection Mode 1:n

Eine ausgefallene Leitung wird direkt durch eine Ersatzleitung ersetzt. Es werden alle SHDSL-Übertragungsstrecken hochgefahren, aber der Ersatzpfad wird erst dann freigeschaltet, wenn der Nutzpfad ausfällt. Es steht ein Ersatzpfad zur Verfügung. Auf dem Ersatzpfad kann «Low Priority Traffic» gefahren werden.

2-Wire Mode; also Protection Mode 1:2

Dieser Mode wird 2-Wire Mode genannt da jede einzelne Leitung im 2-Wire Mode ist. Auf der Sendeseite wird durch den Remote Alarm-Status bestimmt wie viele Datenströme gesendet werden können. Es werden immer die Datenströme gesendet welche von der Konfiguration die höchste Priorität zugewiesen bekommen haben. Haben zwei Datenströme die gleiche Priorität wird der Sendestrom mit der niedrigsten Nummer ausgewählt wenn dadurch nicht ein Sendestrom mit der gleichen Priorität unterbrochen wird. Ein Sendestrom der an der Anwender-/Vermittlungsschnittstelle einen dringenden Alarm hat wird automatisch temporär der niedrigsten Priorität zugewiesen:

```
p <= path(Un)
t1 <= not rx_a1
t2 <= not rx_a2
t3 <= not rx_a3 when prot_n > 1 else '0';
t4 <= not rx_a4 when prot_n > 2 else '0';

a1 <= not AIMSS_p1_ok;
a2 <= not AIMSS_p2_ok;
a3 <= not AIMSS_p3_ok when prot_n > 1 else '0';
a4 <= not AIMSS_p4_ok when prot_n > 2 else '0';
y1 <= alarm_V_IF(Datastream1);
y2 <= alarm_V_IF(Datastream2);
y3 <= alarm_V_IF(Datastream3) when prot_n > 1 else '0';
y4 <= alarm_V_IF(Datastream4) when prot_n > 2 else '0';

q(2 downto 0) <= "11"
q(4 downto 3) <= Nummer (Datastream);

w <= "01";
```

zb <= true_eth ;      -true_eth ist '1' when LT und NT ein

                      -aktives ETH-IF haben

s <= n                -n ist die konfigurierte Geschwindigkeit

                      -vom Framer/Mapper

4-Wire Mode, also Protection Mode 1:4

Dieses System wird 4-Wire Mode genannt da die SHDSL-Leitungen eines 4-Wire-Systems mit 1:1 Protection gefahren werden, sind, das heisst es werden 4 SHDSL-Leitungen gebraucht. Es werden immer die Inverse Multiplexer Teil-Datenströme gesendet welche von der Konfiguration die höchste Priorität zugewiesen bekommen haben:

```
p <= path (Un)
t1 <= not rx_a1
t2 <= not rx_a2
t3 <= not rx_a3;
t4 <= not rx_a4;

a1 <= not AIMSS_p1_ok;
a2 <= not AIMSS_p2_ok;
a3 <= not AIMSS_p3_ok;
a4 <= not AIMSS_p4_ok;
y1 <= alarm_V_IF(Datastream1)
y2 <= alarm_V_IF(Datastream2)
y3 <= '0';
y4 <= '0';

q(2 downto 1) <= "11"
q(3) <= Nummer(Datastream);
q(4) <= Teilstrom;

w <= "01";
```

zb <= true_eth;    -true_eth ist '1' when LT und NT ein

                   -aktives ETH-IF haben

s <= n             -n ist die konfigurierte Geschwindigkeit

                   -vom Framer/Mapper

Figur 4 zeigt das Blockschaltbild eines möglichen AIMSS-Multiplexers 13. Dabei sind gegenüber der Darstellung in Figur 1 vier SHDSL-Übertragungsstrecken 1 vorgesehen. An der Struktur des AIMSS-Multiplexers 13 ändert sich dabei nichts gegenüber einer Anordnung mit zwei SHDSL-Übertragungsstrecken 1.

Die vorstehend genannten Angaben zur Ausführungsform mit 2 Aderpaaren kann modifiziert ebenfalls für eine Ausführungsform mit 4 Aderpaaren übertragen werden.

Die vorstehenden Angaben zu den Qualitätskriterien im Frame AIMSS bzw. in den beiden Subframes AIMSS sind untereinander frei kombinierbar, so dass je nach Anforderung nicht alle Bits gemäss der Tabelle 1 benutzt werden müssen, sondern ggf. auch noch für andere Zwecke zur Verfügung stehen.

**Liste der verwendeten Bezugszeichen Akronyme**

1        Erste SHDSL-Übertragungsstrecke mit einem Aderpaar oder als Zweidrahtleitung

2        Zweite SHDSL-Übertragungsstrecke mit einem Aderpaar oder als Zweidrahtleitung

11       SHDSL-Transceiver

12       Framer Mapper, Rate Adaptation; User Interface

13       AIMSS-Block, Advanced Inverse Multiplexer for SHDSL Systems AIMSS; entspricht dem Transmission Protocol-Specific TC-Layer TPS-TC

$\alpha,\beta$    Schnittstelle zwischen PMS-TC und TPS-TC-Layers in an STU-C resp. STU-R

$\alpha,\alpha_1,\alpha_2$    Anwendungsschnittstelle, Schnittstelle zwischen TPS-TC layer und einem Framer Mapper 12 in einer STU-C

β,β$_1$,β$_2$     Anwendungsschnittstelle, Schnittstelle zwischen TPS-TC layer und einem Framer Mapper 12 in einer STU-R

A, B, C, D     Anwenderschnittstelle wie G.703, Ethernet, X.21, V35, V.36

E, F, G, H     Amtsschnittstelle wie G.703, Ethernet, X.21, V35, V.36

AIMSS     Advanced Inverse Multiplexer for SHDSL Systems an der Anwendungsschnittstelle

ETH, eth     Ethernet

n     Anzahl Wire (Drähte)

Sync     Synchronisationswort aus einem Muster im AIMSS-Frame

**Liste der verwendeten Akronyme**

DLL     Digital Local Loop

ETSI     European Telecommunications Standards Institute, Sophia Antipolis

ITU-T     International Telecommunication Union Tele-communication Standardization Sector of ITU

PMS-TC     Physical Medium-Specific TC-Layer

SHDSL     Symmetric single pair high bitrate Digital Subscriber Line, Acronym gemäss ETSI

SHDSL     Single-Pair High-Speed DSL, Acronym gemäss ITU-T

STU     SHDSL Transceiver Unit;

STU-R     STU at the remote end

STU-C     STU at the central office

TPS-TC     Transmission Protocol-Specific TC-Layer

**Literaturliste**

[1] ITU-T G.991.2 (12/2003)
Seroes G: Transmission systems and media, digital systems and networks
Digital sections and digital line system - Access networks
Single-pair high-speed digital subscriber line (SHDSL) transceivers
[2] ETSI TS 101 524 V1.3.1 (2005-02)
Transmission and Multiplexing (TM);
Access transmission system on metallic access calbes;
Symmetric single pair high bitrate Digital Subscriber Line (SDSL).
[3] US 6,965,608 B1
«Method and apparatus for transmitting Data in a Public Network»
Sanjay Aiyagaria, Sanat Clara, et al.
Assignee: Cisco Technology, Inc., San Jose, CA

**Patentansprüche**

1. Verfahren zur SHDSL-Übertragung mit mehreren SHDSL-Leitungen (1, 2) zur Übertragung von Qualitätskriterien, wobei

   - unter dem Begriff Qualitätskriterien wenigstens eine der SHDSL-Übertragungs-Eigenschaften Resilience, Path Interchange und Protection subsummiert sind,
   - durch die Leitungen (1, 2) zwei SHDSL Transceiver Units (STU-C, STU-R) verbunden sind,
   - auf jeder Leitung in einem festen Zeitraster in einer Rahmenstruktur Nutzdaten übertragen werden,
   - jede SHDSL Transceiver Unit (STU-C, STU-R) pro Leitung einen SHDSL-Transceiver (11) aufweist, der mit einem Framemapper (12) über eine Anwendungsschnittstelle ($\alpha,\beta$) gekoppelt ist und im Framemapper (12) ein Summensignal aus den auf jeder Leitung (1, 2) übertragenen Nutzdaten gebildet wird;

   **dadurch gekennzeichnet, dass**
   in der Anwendungsschnittstelle ($\alpha,\beta$) in jeder SHDSL Transceiver Unit (STU-C, STU-R) ein zusätzliches Bit in einem festen Zeitraster in die Nutzdaten eingefügt wind, wobei aus der Einfügung des zusätzlichen Bit im festen Zeitraster ein Frame (AIMSS) gebildet wird, der die Qualitätskriterien enthält.

2. Verfahren nach Anspruch 1,
   **dadurch gekennzeichnet, dass**
   der Frame (AIMSS) zur Synchronisierung ein festes Muster enthält.

3. Verfahren nach Anspruch 2,
   **dadurch gekennzeichnet, dass**
   der Frame (AIMSS) durch 48 Bits gebildet wird, wobei das Muster durch vordefinierte Werte in den Bits 1 bis 6, 11, 16, 21 und 26 bestimmt ist.

4. Verfahren nach Anspruch 2 oder 3,
   **dadurch gekennzeichnet, dass**
   eine Synchronisierung dann als erfolgt gilt, wenn das Muster im Frame (AIMSS) nach spätestens zwei Vergleichen erkannt wird.

5. Verfahren nach einem der Ansprüche 1 bis 4,
   **dadurch gekennzeichnet, dass**
   der Frame (AIMSS) in zwei Subframe gegliedert ist, über die je eine CRC-Checksumme gebildet wird und in jedem Subframe abgelegt ist.

6. Verfahren nach einem der Ansprüche 1 bis 5,
   **dadurch gekennzeichnet, dass**
   im Frame (AIMSS) die SHDSL-Leitungen in codierter Form enthalten sind, um eine dadurch erkannte Pfadvertauschung zu korrigieren.

7. Verfahren nach einem der Ansprüche 1 bis 6,
   **dadurch gekennzeichnet, dass**
   der Framer (12) in jedem SHDSL Transceiver (STU-R, STU-C) eine packetvermittelte Übertragungsstrecke aufweist.

8. Verfahren nach einem der Ansprüche 1 bis 7,
   **dadurch gekennzeichnet, dass**
   im Frame (AIMSS) vier Bits ($q_1$, $q_4$) enthalten sind, mit denen die Qualitätskriterien Protection und Resilience abgebildet sind.

9. Verfahren nach Anspruch 8,
   **dadurch gekennzeichnet, dass**
   im Frame (AIMSS) die vier Bits ($q_1,..,q_4$) zusätzlich einen Wire Mode der SHDSL-Übertragungsstrecke (1, 2) definieren.

10. SHDSL Transceiver Unit (STU-C, STU-R) mit Mitteln zur Durchführung des Verfahrens nach einem der Ansprüch 1 bis 9.

**Claims**

1. Method for SHDSL transmission having a number of SHDSL lines (1, 2) for transmitting quality criteria, wherein

   - at least one of the SHDSL transmission properties resilience, path interchange and protection is subsumed under the term quality criteria,
   - two SHDSL transceiver units (STU-C, STU-R) are connected by the lines (1, 2),
   - payload data is transmitted in a frame structure in a fixed time grid on each line,
   - each SHDSL transceiver unit (STU-C, STU-R) has one SHDSL transceiver (11) per line, which is coupled to a frame mapper (12) by way of an application interface ($\alpha$, $\beta$) and an aggregate signal is formed from the payload data transmitted on each line (1, 2) in the frame mapper (12);

   **characterised in that**
   an additional bit is inserted into the payload data in a fixed time grid in the application interface ($\alpha$, $\beta$) in each SHDSL transceiver unit (STU-C, STU-R), with a frame (AIMSS) containing the quality criteria being formed from the insertion of the additional bit in the fixed time grid.

2. Method according to claim 1,
   **characterised in that**
   the frame (AIMSS) contains a fixed pattern for synchronisation.

3. Method according to claim 2,
   **characterised in that**
   the frame (AIMSS) is formed by 48 bits, with the pattern being determined by predefined values in the bits 1 to 6, 11, 16, 21 and 26.

4. Method according to claim 2 or 3,
   **characterised in that**
   synchronisation is deemed to have taken place when the pattern in the frame (AIMSS) is identified after at most two comparisons.

5. Method according to one of claims 1 to 4,
   **characterised in that**
   the frame (AIMSS) is divided into two subframes, by way of each of which a CRC checksum is formed and stored in each subframe.

6. Method according to one of claims 1 to 5,
   **characterised in that**
   the SHDSL lines are contained in encoded form in the frame (AIMSS) in order to correct a path inversion identified thereby.

7. Method according to one of claims 1 to 6,
   **characterised in that**
   the framer (12) has a packet-switched transmission link in each SHDSL transceiver (STU-R, STU-C).

8. Method according to one of claims 1 to 7,
   **characterised in that**
   the frame (AIMSS) contains four bits ($q_1$, ..., $q_4$) which are used to map the quality criteria protection and resilience.

9. Method according to claim 8,
   **characterised in that**
   the four bits ($q_1$, ..., $q_4$) also define a wire mode of the SHDSL transmission link (1, 2) in the frame (AIMSS).

10. SHDSL transceiver unit (STU-C, STU-R) with means for carrying out the method according to one of claims 1 to 9.

**Revendications**

**1.** Procédé de transmission SHDSL ayant plusieurs lignes (1, 2) SHDSL pour la transmission de critères de qualité, dans lequel

- par l'expression critères de qualité, on entend au moins l'une des propriétés de transmission SHDSL resilience, path interchange et protection,
- deux unités (STU-C, STU-R) d'émetteur-récepteur sont reliées par les lignes ( 1, 2 ),
- sur chaque ligne, des données utiles sont transmises dans une trame de temps fixe dans une structure cadre,
- chaque unité ( STU-C, STU-R ) d'émetteur-récepteur SHDSL a, par ligne, un émetteur-récepteur ( 11 ) SHDSL, qui est couplé à un framemapper ( 12 ) par une interface ( $\alpha, \beta$ ) application, et il est formé, dans le framemapper ( 12 ), un signal de somme composé des données utiles transmises sur chaque ligne ( 1, 2 ),

**caractérisé en ce que**
dans l'interface ( $\alpha, \beta$ ) application de chaque unité ( STU-C, STU-R ) d'émetteur-récepteur SHDSL, un bit supplémentaire est inséré dans une trame de temps fixe dans les données utiles, dans lequel il est formé, à partir de l'introduction du bit supplémentaire dans la trame de temps fixe, une frame ( AIMSS ), qui contient les critères de qualité.

**2.** Procédé suivant la revendication 1,
**caractérisé en ce que**
la frame ( AIMSS ) contient, pour la synchronisation, un motif fixe.

**3.** Procédé suivant la revendication 2,
**caractérisé en ce que**
la frame (AIMSS) est formée de 48 bits, le motif étant déterminé par des valeurs définies à l'avance dans les bits 1 à 6, 11, 16, 21 et 26.

**4.** Procédé suivant la revendication 2 ou 3,
**caractérisé en ce que**
une synchronisation est considérée comme effectuée, lorsque le modèle est reconnu dans la frame ( AIMSS ) après au plus tard deux comparaisons.

**5.** Procédé suivant l'une des revendications 1 à 4,
**caractérisé en ce que**
la frame ( AIMSS ) est subdivisée en deux sous-frames, par lesquelles, respectivement, une somme de contrôle CRC est formée et est mise dans chaque sous-frame.

**6.** Procédé suivant l'une des revendications 1 à 5,
**caractérisé en ce que**
dans la frame ( AIMSS ), les lignes SHDSL sont contenues sous forme codée pour corriger le changement de trajet ainsi détecté.

**7.** Procédé suivant l'une des revendications 1 à 6,
**caractérisé en ce que**
le framer ( 12 ) a, dans chaque émetteur-récepteur ( STU-R, STU-C ) SHDSL, une section de transmission transmise par paquet.

**8.** Procédé suivant l'une des revendications 1 à 7,
**caractérisé en ce que**
dans la frame ( AIMSS ), sont contenus quatre bits ( $q_1$, .., $q_4$ ), par lesquels les critères de qualité protection et resilience sont reproduits.

**9.** Procédé suivant la revendication 8,
**caractérisé en ce que**
dans la Frame ( AIMSS ), les quatre bits ( q1, .., q4 ) définissent supplémentaire un mode wire de la section ( 1, 2 ) de transmission SHDSL.

10. Unité ( STU-C, STU-R ) d'émetteur-récepteur SHDSL, comprenant des moyens pour effectuer le procédé suivant l'une des revendications 1 à 9.

**FIG 1**

EP 1 826 934 B1

FIG 2

EP 1 826 934 B1

**FIG 3**

No Sync

Asynch

wrong Sync,
Key-Inf changed

Sync recognized

Pre-Asynch

Sync ok,
Key-Inf const

wrong Sync,
Key-Inf changed

Pre-Synch

LOS-U
CRC-Err

wrong Sync,
Key-Inf changed

Synch

Sync ok,
Key-Inf const

Sync ok,
Key-Inf const

Sync ok,
Key-Inf const

EP 1 826 934 B1

13 in STU-R

Input-Shiftregister

AIMSS-Framer

TX-Shift-Register

TX-Shift-Register

TX-Shift-Register

TX-Shift-Register

Payload-Mulitiplexer

4 * SHDSL-Interface

Output-Shiftregister

AIMSS-Deframer

AIMSS-Deframer

AIMSS-Deframer

AIMSS-Deframer

Delta-Delay Buffer

Delta-Delay Buffer

Delta-Delay Buffer

Delta-Delay Buffer

Delta-Delay Ausgleich

**FIG 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6965608 B1

**In der Beschreibung aufgeführte Nicht-Patentliteratur**

- *ETSI TS 101 524 V1.3.1,* Februar 2005, 11